# EUROPÄISCHE PATENTSCHRIFT

(11) **EP 2 873 480 B1**
(45) Veröffentlichungstag und Bekanntmachung des Hinweises auf die Patenterteilung: **12.06.2019**
(21) Anmeldenummer: 14185122.0
(22) Anmeldetag: 17.09.2014
(51) Int. Cl.: B23D 61/00, B23D 61/18

(54) **Sägeblatt für eine oszillierend angetriebene Säge**
Saw blade for an oscillating powered saw blade
Lame de scie pour une scie à entraînement oscillant

(30) Priorität: 15.11.2013 DE 102013112632
(43) Veröffentlichungstag der Anmeldung: 20.05.2015
(73) Patentinhaber: C. & E. Fein GmbH, 73529 Schwäbisch Gmünd-Bargau (DE)
(72) Erfinder: Mann, Rainer, 73434 Aalen-Dewangen (DE)
(74) Vertreter: Roos, Michael

(56) Entgegenhaltungen:
- EP-A1- 0 886 552
- EP-A1- 1 481 750
- EP-A2- 1 193 738
- DE-A1-102012 201 667
- GB-A- 2 075 878
- US-A- 5 018 276
- US-A- 5 697 835

## Beschreibung

Zur handgeführten Bearbeitung von Faserverbundwerkstoffen werden üblicherweise schnelldrehende, diamantbeschichtete Werkzeuge eingesetzt, wobei es sich insbesondere um diamantbeschichtete Schneid- oder Schleifwerkzeuge handelt.

Als nachteilig ist hierbei die starke Staubentwicklung anzusehen, die infolge der schnellen Drehbewegung zu einer starken Aufwirbelung von Staub führt. Deshalb erfordert die Bearbeitung von Faserverbundwerkstoffen eine aufwändige Staubabsaugung, was bei handgeführter Bearbeitung oft kaum oder nur schwer zu realisieren ist. Außerdem entstehen an der Schnittfläche am Werkstück und am Werkzeug sehr hohe Temperaturen in der Größenordnung von etwa 60°C.

Aus der GB 2 075 878 A ist ein Sägeblatt für eine oszillierende Säge gemäß dem Oberbegriff von Anspruch 1 bekannt, das eine Folge von spitzen, dreieckförmigen Zähnen aufweist, die sich entlang des Außenumfangs eines kreisförmigen Sägeblatts erstrecken. Die Zähne sind mit Diamantpartikeln teilweise beschichtet.

Hiermit ist in Folge der oszillierenden Antriebsbewegung zwar eine verbesserte Sägeleistung bei vermindertem Staubanfall ermöglicht, jedoch ist das Sägeblatt nicht besonders zum Sägen von Faserverbundwerkstoffen geeignet.

Ein ähnlich aufgebautes Sägeblatt für eine oszillierende Säge ist aus der US 5,697,835 A bekannt, das jedoch mit den gleichen Nachteilen behaftet ist.

Aus der WO 97/33714 A1 ist ferner ein Sägeblatt für eine rotierend antreibbare Säge bekannt, das jeweils eine Folge von Zähnen aufweist, die mit Abrasivpartikeln beschichtet sind. Neben dreieckigen Zahnformen sind auch verschiedene schräge und rechtförmige Zahnformen bekannt.

Aus der US 5,018,276 ist ein rundes Sägeblatt für eine Kreissäge bekannt, dessen Zähne in einem aufwendigen Prozess diamantbeschichtet werden müssen, um die Lebensdauer des Sägeblatts zu verbessern.

Vor diesem Hintergrund liegt der Erfindung die Aufgabe zugrunde, eine Möglichkeit zum Sägen von Faserverbundwerkstoffen zu offenbaren, womit der Staubanfall bei der Bearbeitung deutlich reduziert werden kann und gleichzeitig ein gutes Arbeitsergebnis erzielbar ist.

Diese Aufgabe wird durch ein Sägeblatt mit den Merkmalen des Anspruchs 1 gelöst.

Die Aufgabe der Erfindung wird auf diese Weise gelöst.

Erfindungsgemäß erstrecken sich die Kopfflächen der Zähne entlang eines zur Befestigungsöffnung konzentrischen Teilkreises. Damit ergibt sich ein annähernd gleichbleibender Abstand der Kopffläche von der Werkstückoberfläche während des Sägevorgangs.

Insgesamt hat sich überraschenderweise gezeigt, dass mit einem oszillierend angetriebenen Sägeblatt, dessen mindestens eine Schneide zumindest teilweise mit Abrasivpartikeln versehen ist und bei dem sich die Kopfflächen der Zähne entlang eines zur Befestigungsöffnung konzentrischen Teilkreises erstrecken, sich sehr gute Sägeergebnisse mit geringem Staubanfall und mit geringer Erwärmung beim Sägen von Faserverbundwerkstoffen erzielen lassen.

Die Abrasivpartikel können vorteilhaft aus Diamant, Hartmetall oder Bornitrit bestehen.

Überraschenderweise hat sich gezeigt, dass Abrasivpartikel aus Hartmetall gut geeignet sind, um eine gute Schneidleistung bei geringem Staubanfall zu bewirken. Auch Abrasivpartikel noch größerer Härte, also aus Bornitrit oder Diamant, sind besonders gut geeignet.

Gemäß einer weiteren Ausgestaltung der Erfindung sind die Abrasivpartikel in einer Metallbeschichtung auf einer Oberfläche des Sägeblattes gehalten.

Durch eine Metallbeschichtung lässt sich eine dauerhafte und hochwirksame Fixierung der Abrasivpartikel auf einer Oberfläche des Sägeblattes gewährleisten.

Gemäß einer weiteren Ausgestaltung der Erfindung bestehen die Abrasivpartikel aus Diamant oder Bornitrit und die Metallbeschichtung aus einer Nickellegierung, die vorzugsweise galvanisch abgeschieden ist.

Diese Maßnahme hat den Vorteil, dass eine derartige Metallbeschichtung eine besondere Zähigkeit und Härte besitzt und gleichzeitig eine sichere Fixierung der Abrasivpartikel gewährleistet.

Gemäß einer weiteren Ausgestaltung der Erfindung bestehen die Abrasivpartikel aus Hartmetall und die Metallbeschichtung aus einer Lotlegierung, vorzugsweise aus einer Legierung auf Kupferbasis.

Diese Maßnahme hat den Vorteil, dass sich mit einer derartigen Metallbeschichtung eine besonders sichere Fixierung der Abrasivpartikel aus Hartmetall auf der Oberfläche des Sägeblattes erzielen lässt. Außerdem ergibt sich eine einfache Herstellung, indem die Abrasivpartikel zunächst mit einer Lotpaste auf die zu beschichtende Oberfläche appliziert werden und dann durch Aufheizen in einem Ofen die Lotpaste aufgeschmolzen und sicher mit dem Sägeblatt verbunden werden kann, wobei die Abrasivpartikel erhaben hervorstehen.

Die Abrasivpartikel weisen bevorzugt eine mittlere Partikelgröße von 0,05 bis 1 mm auf, vorzugsweise von 0,1 bis 0,7 mm, weiter bevorzugt von 0,1 bis 0,5 mm.

Es hat sich gezeigt, dass insbesondere bei Hartmetallpartikeln mittlere Partikelgrößen im Bereich von 0,1 bis 0,3 mm besonders geeignet sind und bei Diamant- oder Bornitritpartikeln mittlere Partikelgrößen von etwa 0,3 bis 0,4 mm besonders geeignet sind.

In vorteilhafter Weiterbildung der Erfindung weist die Schneide Zähne auf, die zumindest teilweise mit Abrasivpartikeln versehen sind.

Hierbei sind bevorzugt zumindest an den Zahnköpfen Abrasivpartikel vorgesehen.

Gemäß einer weiteren vorteilhaften Ausgestaltung der Erfindung sind die Zähne auch im Bereich von Zahnlücken zwischen den einzelnen Zähnen mit Abrasivpartikeln versehen.

Ferner ist es bevorzugt, dass die Abrasivpartikel zumindest teilweise auch auf Seitenflächen des Sägeblattes angeordnet sind.

Mit diesen Maßnahmen lässt sich eine besonders gute Schneidleistung beim Sägen von Faserverbundwerkstoffen gewährleisten.

Vorzugsweise weisen die Zähne Zahnköpfe auf, die durch Zahnlücken voneinander getrennt sind.

Hierbei erstrecken sich die Zähne entlang eines Teilkreises, der konzentrisch zu einer Befestigungsöffnung für die Befestigung des Sägeblattes an einer Werkzeugspindel eines Oszillationsantriebes verläuft.

Dies führt zu einem sehr ruhigen Lauf des Sägeblattes während des Sägevorgangs und vermeidet örtliche Überbeanspruchungen des Werkstücks.

Das betreffende Sägeblatt ist als teilkreisförmiges Sägeblatt ausgebildet.

Durch die Zahnlücken zwischen den einzelnen Zahnköpfen ist ein ausreichender Spanabtransport gewährleistet.

Es sind zahlreiche Ausführungsformen der Zähne denkbar, insbesondere eine Ausgestaltung als Rechteckzähne, als Trapezzähne, als negative Trapezzähne, als M-Zähne, als Rechteckzähne ohne Grundradius, als Rundzähne, als Schrägzähne oder als Flachrundzähne.

Mit allen diesen Ausführungen lassen sich gute Schneidleistungen bei einem relativ geringen Staubanfall erzielen. Erfindungsgemäß sind die Zähne jedoch nicht mit Keilwinkeln versehen, also nicht als herkömmliche Sägezähne ausgestaltet, bei denen sich ausgehend von einer Zahnspitze ein Zahnrücken keilförmig in Richtung des Zahngrundes erstreckt.

Erfindungsgemäß erstrecken sich die Kopfflächen der Zähne, wie oben bereits erwähnt, entlang eines zur Befestigungsöffnung konzentrischen Teilkreises. Damit ergibt sich ein annähernd gleichbleibender Abstand der Kopffläche von der Werkstückoberfläche während des Sägevorgangs.

Die Stärke des Sägeblattes beträgt im nicht beschichteten Bereich vorzugsweise maximal 1,5 mm, weiter bevorzugt maximal 1 mm, besonders bevorzugt 0,4 bis 1 mm. Im beschichteten Bereich beträgt die Stärke des Sägeblattes vorzugsweise 1 bis 2,5 mm, vorzugsweise etwa 1,2 Millimeter bei feiner Körnung und etwa 2,2 Millimeter bei grober Körnung.

Es hat sich gezeigt, dass sich mit einem derartig schlanken Sägeblatt eine besonders gute Schneidleistung bei Faserverbundwerkstoffen erzielen lässt.

Wie vorstehend bereits erwähnt, lässt sich ein vorstehend beschriebenes Sägeblatt besonders vorteilhaft zum Sägen von Faserverbundwerkstoffen verwenden, insbesondere zum Sägen von Carbonfaserkunststoffen, glasfaserverstärkten Kunststoffen oder allgemein Verbundwerkstoffen, die insbesondere aus Kunststoff im Verbund mit einem zweiten Material, wie z.B. Aluminium, bestehen.

Eine erfindungsgemäße Werkzeugmaschine zum Sägen von Faserverbundwerkstoffen weist einen Oszillationsantrieb auf, der eine um ihre Längsachse oszillierend antreibbare Werkzeugspindel aufweist, an der ein Sägeblatt nach der vorstehend beschriebenen Art festlegbar ist.

In weiter bevorzugter Ausgestaltung der Erfindung weist das Sägeblatt eine Verzahnung mit einer Zahnteilung T auf, die kleiner ist als der doppelte Oszillationswinkel α des Oszillationsantriebs: T < 2α.

Ferner weist das Sägeblatt bevorzugt eine Verzahnung mit einer Zahnteilung T auf, die größer ist als der Oszillationswinkel α des Oszillationsantriebs: T > α.

Mit einer derartigen Dimensionierung der Zahnteilung ist sichergestellt, dass sich zumindest immer ein Zahn im Eingriff befindet, während das Sägeblatt hin und her oszilliert. Unter dem Oszillationswinkel α versteht man hierbei den Winkel, mit dem die Antriebswelle von Umkehrpunkt zu Umkehrpunkt oszilliert.

Gemäß einer weiteren Ausgestaltung der Erfindung erstrecken sich die Zahnköpfe in Umfangsrichtung jeweils über einen Winkelbereich von Z und die Zahnlücken über einen Winkelbereich von L, wobei das Verhältnis von Z/L größer als 1 ist, vorzugsweise im Bereich von 4L > Z > L liegt.

Mit einer derartigen Dimensionierung ergibt sich eine gute Stabilität und gelichzeitig gute Staubabfuhr.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Figur 1: eine erfindungsgemäße Werkzeugmaschine in der Seitenansicht;
- Figur 2: die Werkzeugmaschine gemäß Figur 1 in einer Ansicht von oben;
- Figur 3: eine vergrößerte Darstellung eines erfindungsgemäßen Sägeblattes gemäß Figur 2 von oben;
- Figur 4: einen Schnitt durch das Sägeblatt gemäß Figur 3 längs der Linie IV-IV;
- Figur 5: einen vergrößerten Teilschnitt der Einzelheit V gemäß Figur 4;
- Figur 6: eine vergrößerte Darstellung eines Sägeblattes, das gegenüber der Ausführung gemäß Figur 3 leicht abgewandelt ist;
- Figur 7: eine vergrößerte perspektivische Teilansicht eines Zahnkopfes des Sägeblattes gemäß Figur 6;
- Figur 8: eine vergrößerte Teilansicht einer weiteren Ausführung eines erfindungsgemäßen Sägeblattes, aus der die Winkelverhältnisse zu ersehen sind;
- Figur 9: eine Ansicht einer weiteren Ausführung eines Sägeblattes, das jedoch nicht zur Erfindung gehört, und
- Figuren 10 bis 17: Teilansichten von teilkreisförmigen Sägeblättern mit unterschiedlichen Zahnformen.

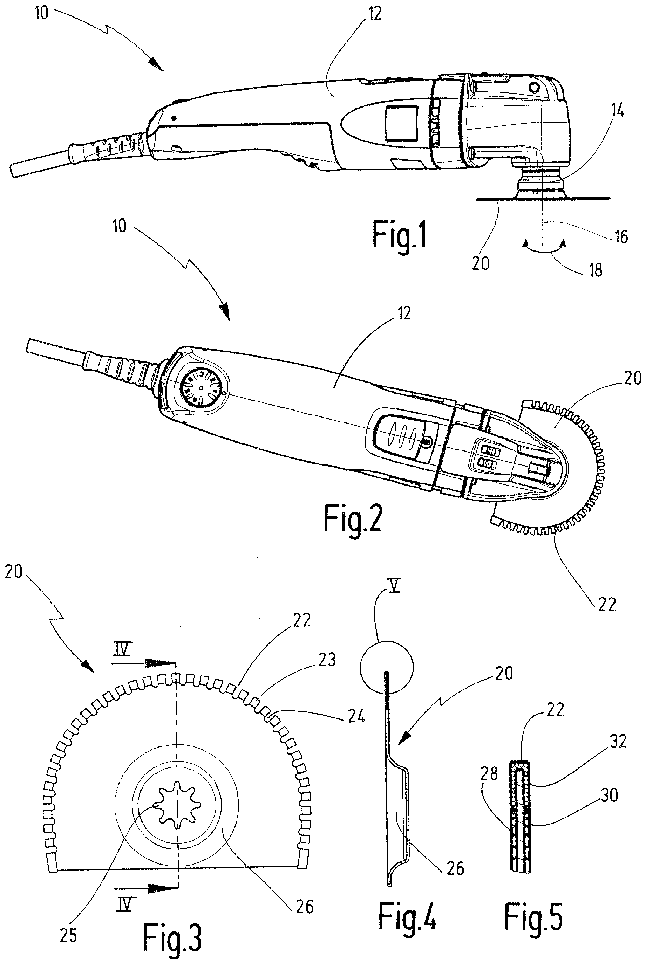

In den Fig. 1 und 2 ist eine erfindungsgemäße Werkzeugmaschine dargestellt und insgesamt mit der Ziffer 10 bezeichnet.

Die Werkzeugmaschine 10 umfasst einen Oszillationsantrieb 12 grundsätzlich bekannter Bauart mit einer Werkzeugspindel 14, die um ihre Längsachse 16 mit hoher Frequenz (ca. 10.000 bis 20.000 Oszillationen pro Minute) und geringem Verschwenkwinkel angetrieben wird. Der Verschwenkwinkel oder Oszillationswinkel a kann im Bereich von etwa 1° bis 5° liegen und beträgt im vorliegenden Fall 3,2° (von Umkehrpunkt zu Umkehrpunkt).

Am äußeren Ende der Werkzeugspindel 14 ist ein erfindungsgemäßes Werkzeug in Form eines Sägeblattes 20 befestigt. Das Sägeblatt 20 weist eine teilkreisförmige Schneide 22 auf, die, wie nachfolgend noch näher beschrieben wird, mit Abrasivpartikeln beschichtet ist.

Fig. 3 zeigt eine vergrößerte Aufsicht des Sägeblattes 20 gemäß Fig. 2.

Zur Befestigung des Sägeblattes 20 am äußeren Ende der Werkzeugspindel 14 ist eine Befestigungsöffnung 25 im Bereich einer Abkröpfung 26 vorgesehen. Die Befestigungsöffnung 25 ist an die zugehörige Form der Werkzeugspindel 14 angepasst, so dass eine formschlüssige Festlegung an der Werkzeugspindel 14 ermöglicht ist. Durch die Abkröpfung 26 (vgl. Fig. 4) kann die Befestigung an der Werkzeugspindel 14 versenkt erfolgen, so dass mit dem Sägeblatt 20 unmittelbar entlang einer Werkstückoberfläche gearbeitet werden kann.

Die Schneide 22 weist eine Folge von Sägezähnen 23 auf, die jeweils durch eine Zahnlücke 24 mit rundem Grund voneinander getrennt sind. Die Zähne 23 erstrecken sich entlang eines zur Befestigungsöffnung 25 konzentrischen bzw. eines zu einer Mittelachse durch die Befestigungsöffnung 25 konzentrischen Teilkreises und sind rechteckförmig ausgebildet.

Erfindungsgemäß sind die Zähne 23 nur im Bereich ihres jeweiligen Zahnkopfes allseits mit Abrasivpartikeln versehen, die in einer Metallbeschichtung 32 fixiert sind. Die Metallbeschichtung 32 erstreckt sich bei der Ausführung gemäß Fig. 3 nur über den Bereich der Zahnköpfe, nicht jedoch bis zum Grund der Zahnlücken 24.

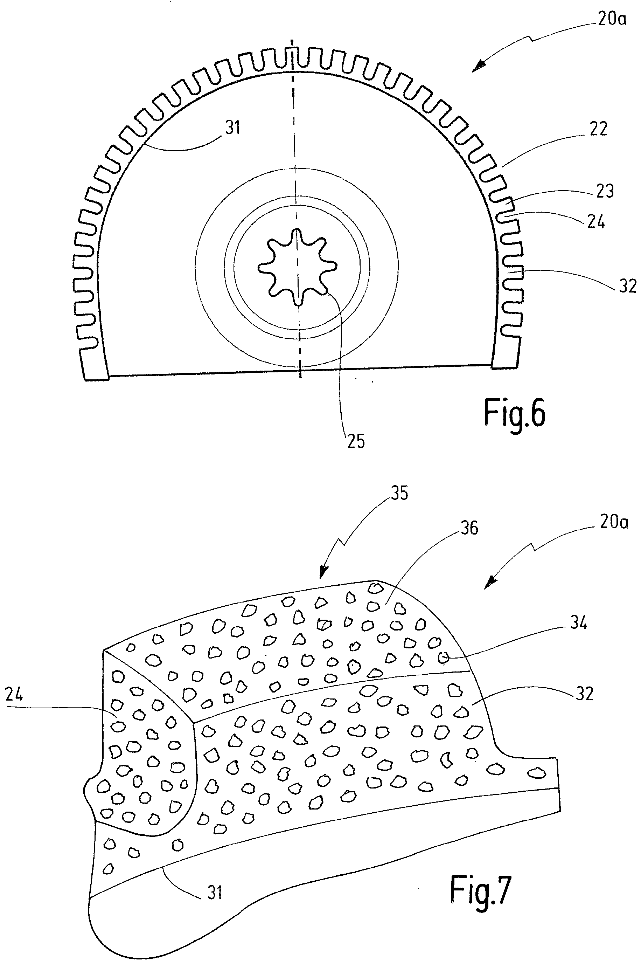

Fig. 6 zeigt eine leicht abgewandelte Ausführung, wobei sich die Metallbeschichtung 32 mit Abrasivpartikeln ausgehend von den Zahnköpfen 32 bis über den Bereich des Grundes der Zahnlücken 24 hinaus bis zu einer Linie 31 erstreckt, die die Grenze der Metallbeschichtung 32 anzeigt.

Fig. 7 zeigt eine vergrößerte Darstellung eines Zahnkopfes 35 des Sägeblattes 20a in perspektivischer Darstellung, aus der die Metallbeschichtung 32 mit Abrasivpartikeln 34 besser ersichtlich ist.

Es versteht sich, dass die Darstellung gemäß Fig. 7 lediglich rein schematischer Natur ist und nicht die tatsächlichen Größenverhältnisse wiedergeben muss.

Im dargestellten Fall ist der gesamte Zahnkopf 35 sowohl im Bereich seiner dem Werkstück zugewandten teilkreisförmig bzw. teilzylindrisch ausgebildeten Kopffläche 36, als auch im Bereich seiner Zahnlücken 24, als auch im Bereich der vorderen und hinteren Seitenfläche mit der Metallbeschichtung 32 versehen, in der Abrasivpartikel 34 eingeschlossen sind. Die Abrasivpartikel 34 stehen aus der Metallbeschichtung 32 erhaben hervor. Die Metallbeschichtung 32 erstreckt sich über den Bereich der Zahnlücken 24 hinaus weiter nach innen bis zur Grenze 31 gemäß Fig. 6.

Die Abrasivpartikel 34 bestehen vorzugsweise aus Diamant, Bornitrit oder Hartmetall und sind in der Metallbeschichtung 32 gebunden.

Soweit die Abrasivpartikel 34 aus Diamant oder Bornitrit bestehen, so besteht die Metallbeschichtung 32 aus einer Nickellegierung, die vorteilhaft galvanisch abgeschieden sein kann.

Soweit die Abrasivpartikel 34 aus Hartmetall bestehen, sind diese vorzugsweise in einer Metallbeschichtung 32 gebunden, die aus einer Lotlegierung, vorzugsweise aus einer Legierung auf Kupferbasis besteht.

Während die Nickellegierung vorteilhaft galvanisch oder auch katodisch, anodisch oder nasschemisch abgeschieden werden kann, erlaubt es die Ausgestaltung der Metallbeschichtung 32 aus einer Lotlegierung, die Abrasivpartikel 34 zusammen mit einer Lotpaste auf die zu beschichtenden Oberflächen aufzutragen und dann durch eine Erhitzung in einem Ofen die Lotpaste aufzuschmelzen, um so eine sichere Verbindung mit der Oberfläche des Sägeblattes und eine sichere Fixierung der Abrasivpartikel 34 zu erreichen.

Es hat sich gezeigt, dass bei Diamantpartikeln oder Bornitritpartikeln mittlere Partikelgrößen von etwa 0,3 bis 0,4 mm optimal sind. Bestehen die Abrasivpartikel dagegen aus Hartmetall, so haben sich Partikelgrößen von etwa 0,1 bis 0,3 mm als besonders vorteilhaft erwiesen.

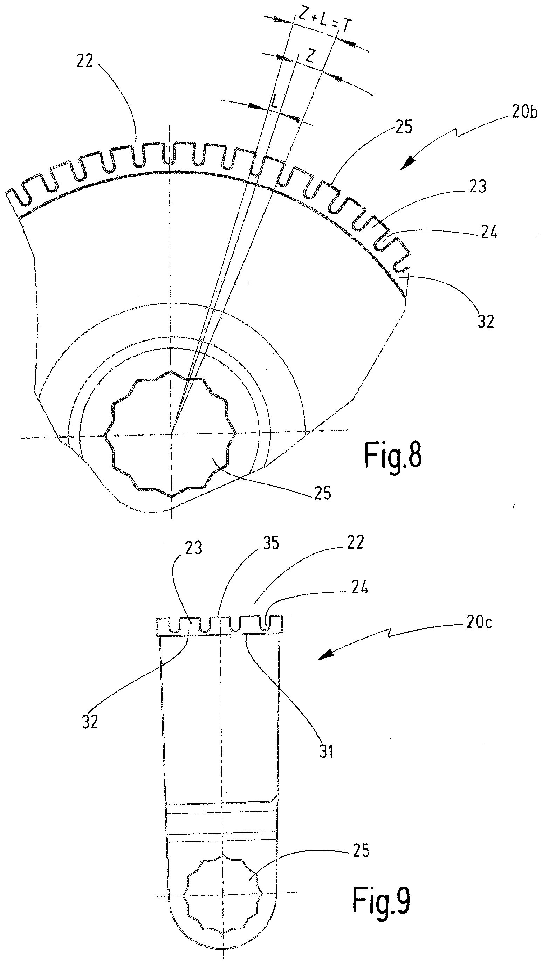

In Fig. 8 sind die geometrischen Verhältnisse der Zahnteilung und der Größe der Zähne und der Zahnlücken dargestellt.

Der Winkel, über den sich ein Zahn 23 erstreckt, sei hier mit Z bezeichnet. Benachbarte Zähne 23 sind jeweils durch eine Zahnlücke 24 voneinander getrennt. Der Winkelbereich, über den sich eine Zahnlücke 24 erstreckt, sei hier mit L bezeichnet. Die Zahnteilung T ergibt sich also als Summe aus Z und L: T = Z + L. Bevorzugt ist hierbei das Verhältnis von Z/L größer als 1 und liegt vorzugsweise im Bereich von 4L > Z > L. Im dargestellten Fall gemäß Fig. 8 ist Z etwa gleich 2L

Definiert man als Oszillationswinkel α den Winkel, um den sich die Werkzeugspindel 14 von Umkehrpunkt zu Umkehrpunkt bewegt, so liegt die Zahnteilung T bevorzugt zwischen dem einfachen und dem zweifachen Oszillationswinkel. Beträgt also der Oszillationswinkel α wie im vorliegenden Fall 3,2°, so sollte die Zahnteilung T vorzugsweise zwischen 3,2° und 6,4° liegen.

Mit einer derartigen Dimensionierung ist gewährleistet, dass sich während des Sägevorgangs zumindest immer ein Zahn im Eingriff befindet. Gleichzeitig sind eine ausreichende Stabilität und eine ausreichende Spanabfuhr gewährleistet.

Fig. 9 zeigt eine abgewandelte Ausführung eines Sägeblattes, das insgesamt mit 20c bezeichnet ist, das jedoch nicht von der Erfindung umfasst ist. Der wesentliche Unterschied zum Sägeblatt gemäß Fig. 8 besteht darin, dass es sich um ein langgestrecktes Sägeblatt anstelle eines teilkreisförmigen Sägeblattes handelt. Dies bedeutet, dass die Befestigungsöffnung 25, die hier mehrkantförmig ausgebildet ist, sich am einen Ende des Sägeblattes 20c befindet, während am gegenüberliegenden Ende die Schneide 22 mit den Zähnen 23 und den dazwischen liegenden Zahnlücken 24 angeordnet ist.

Die Zähne 23 weisen Zahnköpfe 35 auf, die sich mit ihren Kopfflächen entlang einer Geraden bzw. einer Ebene erstrecken, die tangential zu einem Teilkreis um die Befestigungsöffnung 25 bzw. um eine Mittelachse durch die Befestigungsöffnung 25 verläuft. Die Schneide 22 ist wiederum im Bereich ihrer Zähne 23 allseitig mit der Beschichtung 32 mit Abrasivpartikeln 34 versehen. Dabei erstreckt sich die Beschichtung 32 über den Bereich der Zahnlücken 24 hinaus bis zur Grenze 31.

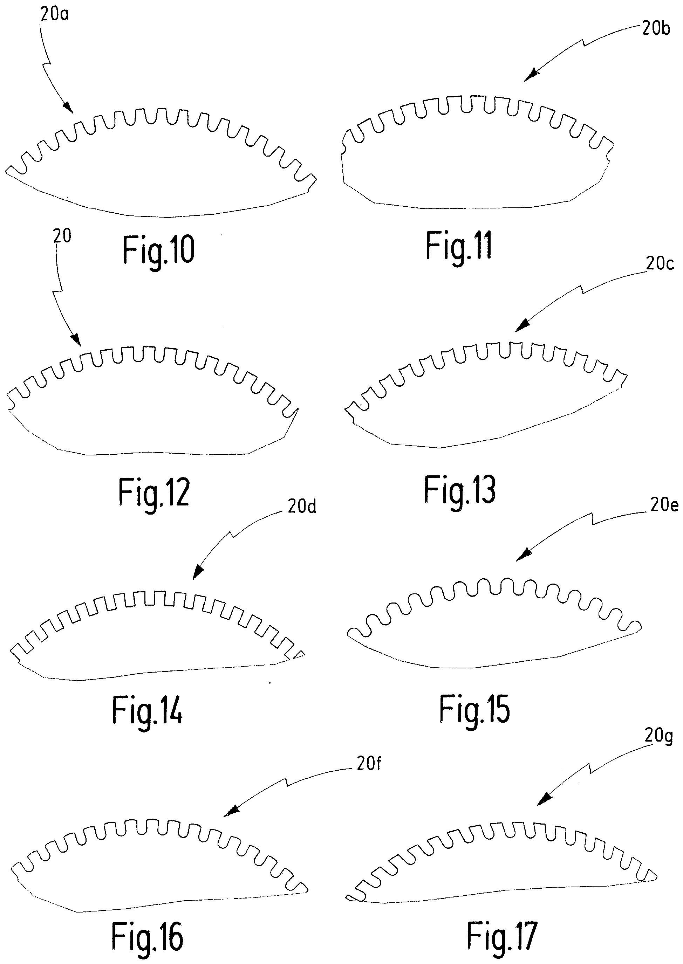

In den Fig. 10 bis 17 sind eine Reihe von verschiedenen Zahnformen dargestellt, die sich zum Sägen von Faserverbundwerkstoffen eignen.

Es handelt sich hierbei jeweils um eine Teilansicht eines teilkreisförmigen Sägeblattes im Bereich der Schneide.

Das Sägeblatt 20 gemäß Fig. 12 entspricht der zuvor anhand von Fig. 6 beschriebenen Ausführungsform.

Das Sägeblatt 20a gemäß Fig. 10 zeigt trapezförmige Zähne mit runden Zahnlücken.

Das Sägeblatt 20b gemäß Fig. 11 zeigt Zähne mit negativer Trapezform und runden Zahnlücken.

Das Sägeblatt 20c gemäß Fig. 13 zeigt M-Zähne, bei denen sich die Kopfflächen 36 in einer nach außen konkaven Krümmung erstrecken, jeweils mit abgerundeten Zahnlücken zwischen den einzelnen Zähnen.

Das Sägeblatt 20d gemäß Fig. 14 weist rechteckförmige Zähne mit gleichfalls rechteckförmigen Zahnlücken auf.

Das Sägeblatt 20e gemäß Fig. 15 weist Rundzähne mit abgerundeten Zahnlücken auf.

Das Sägeblatt 20f gemäß Fig. 16 weist Flachrundzähne auf, bei denen die nach außen weisenden Rundungen der einzelnen Zähne gegenüber der Ausführung des Sägeblattes 20e gemäß Fig. 15 abgeflacht sind.

Das Sägeblatt 20g gemäß Fig. 17 weist Schrägzähne mit abgerundeten Zahnlücken auf.

Es versteht sich, dass die vorstehend beschriebenen Zahnformen gemäß Fig. 10 bis 17 nicht abschließender Natur sind, sondern dass grundsätzlich auch andere Zahnformen denkbar sind.

## Patentansprüche

1. Sägeblatt für eine um eine Längsachse (16) oszillierend angetriebene Werkzeugmaschine (10) mit mindestens einer verzahnten Schneide (22) mit Zähnen (23), die zumindest teilweise mit Abrasivpartikeln (34) versehen sind, die vorzugsweise aus Diamant, Hartmetall oder Bornitrid bestehen, wobei die Zähne (23) entlang eines Teilkreises angeordnet sind, der konzentrisch zu einer Befestigungsöffnung (25) für die Befestigung des Sägeblattes (20, 20a-g) an einer Werkzeugspindel (14) eines Oszillationsantriebes (12) verläuft, **dadurch gekennzeichnet, dass** die Zähne (23) Kopfflächen (36) aufweisen, die sich entlang des zur Befestigungsöffnung (25) konzentrischen Teilkreises erstrecken und dass das Sägeblatt als ein teilkreisförmiges Sägeblatt gebildet ist.

2. Sägeblatt nach Anspruch 1, **dadurch gekennzeichnet, dass** die Abrasivpartikel (34) in einer Metallbeschichtung (32) auf einer Oberfläche des Sägeblattes (20, 20a, 20b, 20c, 20d, 20e, 20f, 20g) gehalten sind.

3. Sägeblatt nach Anspruch 2, **dadurch gekennzeichnet, dass** die Abrasivpartikel (34) aus Diamant oder Bornitrid bestehen und die Metallbeschichtung (32) aus einer Nickellegierung besteht, die vorzugsweise galvanisch abgeschieden ist.

4. Sägeblatt nach Anspruch 2, **dadurch gekennzeichnet, dass** die Abrasivpartikel (34) aus Hartmetall bestehen und die Metallbeschichtung (32) aus einer Lotlegierung besteht, vorzugsweise aus einer Legierung auf Kupferbasis besteht.

5. Sägeblatt nach einem der vorhergehenden Ansprüche, **dadurch gekennzeichnet, dass** die Abrasivpartikel (34) eine mittlere Partikelgröße von 0,05 bis 1 mm aufweisen, vorzugsweise 0,1 bis 0,7 mm, weiter bevorzugt 0,1 bis 0,5 mm.

6. Sägeblatt nach einem der Ansprüche 1 bis 5, **dadurch gekennzeichnet, dass** die Zähne (23) Zahnköpfe (35) aufweisen, die durch Zahnlücken (24) voneinander getrennt sind.

7. Sägeblatt nach 6, **dadurch gekennzeichnet, dass** die Zähne (23) zumindest an ihren Zahnköpfen (35) oder ihren Zahnlücken (24) zumindest teilweise mit Abrasivpartikeln (34) versehen sind.

8. Sägeblatt nach einem der vorhergehenden Ansprüche, **dadurch gekennzeichnet, dass** die Abrasivpartikel (34) zumindest teilweise auch auf Seitenflächen (28, 30) des Sägeblattes (20, 20a-g) angeordnet sind.

9. Sägeblatt nach einem der Ansprüche 1 bis 8, **dadurch gekennzeichnet, dass** sich die Zahnköpfe (35) in Umfangsrichtung jeweils über einen Winkelbereich von Z erstrecken und die Zahnlücken (24) über einen Winkelbereich von L, wobei das Verhältnis von Z/L größer als 1 ist, vorzugsweise im Bereich von 4L > Z > L liegt.

10. Sägeblatt nach einem der vorhergehenden Ansprüche, **dadurch gekennzeichnet, dass** das Sägeblatt im nicht beschichteten Bereich eine Stärke von maximal 1,5 Millimeter, vorzugsweise von maximal 1 Millimeter, bevorzugt von 0,4 bis 1 Millimeter aufweist, und das im beschichteten Bereich eine Stärke von 1 bis 2,5 Millimeter aufweist.

11. Werkzeugmaschine zum Sägen von Faserverbundwerkstoffen, mit einem Oszillationsantrieb (12), der eine um ihre Längsachse (16) oszillierend antreibbare Werkzeugspindel (14) aufweist, an der ein Sägeblatt (20, 20ag) nach einem der Ansprüche 1 bis 10 aufgenommen ist.

## Claims

1. Saw blade for a machine tool (10) driven in an oscillating manner about a longitudinal axis (16), having at least one toothed cutting edge (22) with teeth (23) at least partially provided with abrasive particles (34), which are preferably made of diamond, carbide or boron nitride, wherein the teeth (23) are arranged along a pitch circle concentric to a fastening opening (25) for fastening the saw blade (20, 20a-g) onto a tool spindle (14) of an oscillation drive (12), **characterised in that** the teeth (23) have top surfaces (36) extending along the pitch circle concentric to the fastening opening (25) and **in that** the saw blade is formed as a part-circular saw blade.

2. Saw blade according to claim 1, **characterised in that** the abrasive particles (34) are held in a metal coating (32) on a surface of the saw blade (20, 20a, 20b, 20c, 20d, 20e, 20f, 20g).

3. Saw blade according to claim 2, **characterised in that** the abrasive particles (34) comprise diamond or boron nitride and the metal coating (32) comprises a nickel alloy, which is preferably electrodeposited.

4. Saw blade according to claim 2, **characterised in that** the abrasive particles (34) comprise carbide and the metal coating (32) comprises a solder alloy, preferably a copper-based alloy.

5. Saw blade according to any one of the preceding claims, **characterised in that** the abrasive particles (34) have an average particle size of 0.05 to 1 mm, preferably 0.1 to 0.7 mm, more preferably 0.1 to 0.5 mm.

6. Saw blade according to any one of claims 1 to 5, **characterised in that** the teeth (23) have tooth heads (35) which are separated from each other by tooth gaps (24).

7. Saw blade according to 6, **characterised in that** the teeth (23) are provided at least partially with abrasive particles (34), at least on their tooth heads (35) or their tooth gaps (24).

8. Saw blade according to any one of the preceding claims, **characterised in that** the abrasive particles (34) are arranged at least partially on side surfaces (28, 30) of the saw blade (20, 20a-g).

9. Saw blade according to any one of claims 1 to 8, **characterised in that** the tooth heads (35) respectively extend in a circumferential direction over an angle range of Z and the tooth gaps (24) extend over an angle range of L, wherein the ratio of Z/L is greater than 1 and preferably falls in the range of 4L > Z > L.

10. Saw blade according to any one of the preceding claims, **characterised in that** the saw blade has a maximum thickness in its uncoated region of 1.5 millimetres, preferably of 1 millimetre, advantageously from 0.4 to 1 millimetre, and in its coated region has a thickness of 1 to 2.5 millimetres.

11. Machine tool for sawing fibre composite materials, comprising an oscillation drive (12) having a tool spindle (14) which can be driven in an oscillating manner about its longitudinal axis (16) and which incorporates a saw blade (20, 20a-g) according to any one of Claims 1 to 10.

## Revendications

1. Lame de scie pour une machine-outil (10) commandée en mode oscillant autour d'un axe longitudinal (16) avec au moins un taillant denté (22) avec des dents (23), qui sont pourvues au moins en partie de particules abrasives (34) qui sont constituées de préférence de diamant, de métal dur ou de nitrure de bore, dans laquelle les dents (23) sont agencées le long d'un cercle primitif qui s'étend concentriquement à une ouverture de fixation (25) pour la fixation de la lame de scie (20, 20a-g) sur une broche d'outil (14) d'une commande d'oscillation (12), **caractérisée en ce que** les dents (23) présentent des sommets (36) qui s'étendent le long du cercle primitif concentrique à l'ouverture de fixation (25) et la lame de scie se présente sous la forme d'une lame de scie semi-panoramique.

2. Lame de scie selon la revendication 1, **caractérisée en ce que** les particules abrasives (34) sont maintenues dans un revêtement métallique (32) sur une surface de la lame de scie (20, 20a, 20b, 20c, 20d, 20e, 20f, 20g).

3. Lame de scie selon la revendication 2, **caractérisée en ce que** les particules abrasives (34) sont constituée de diamant ou de nitrure de bore et le revêtement métallique (32) est constitué d'un alliage de nickel qui est déposé de préférence par voie galvanique.

4. Lame de scie selon la revendication 2, **caractérisée en ce que** les particules abrasives (34) sont constituées d'un métal dur et le revêtement métallique (32) est constitué d'un alliage à souder, de préférence d'un alliage à base de cuivre.

5. Lame de scie selon l'une quelconque des revendications précédentes, **caractérisée en ce que** les particules abrasives (34) présentent une taille particulaire moyenne de 0,05 à 1 mm, de préférence de 0,1 à 0,7 mm, mieux encore de 0,1 à 0,5 mm.

6. Lame de scie selon l'une quelconque des revendications 1 à 5, **caractérisée en ce que** les dents (23) présentent des sommets de dents (35) qui sont séparés l'un de l'autre par des entredents (24).

7. Lame de scie sans la revendication 6, **caractérisée en ce que** les dents (23) sont pourvues, au moins sur leurs sommets de dents (35) ou leurs entredents (24), au moins en partie de particules abrasives (34).

8. Lame de scie selon l'une quelconque des revendications précédentes, **caractérisée en ce que** les particules abrasives (34) sont agencées au moins en partie également sur les faces latérales (28, 30) de la lame de scie (20, 20a-g).

9. Lame de scie selon l'une quelconque des revendications 1 à 8, **caractérisée en ce que** les sommets de dents (35) s'étendent dans la direction périphérique respectivement sur une plage angulaire de Z et les entredents (24) sur une plage angulaire de L, dans laquelle le rapport de Z/L est supérieur à 1, de préférence se situe dans la zone de 4L > Z > L.

10. Lame de scie selon l'une quelconque des revendications précédentes, **caractérisée en ce que** la lame de scie présente dans la zone non revêtue une épaisseur au maximum de 1,5 millimètre, de préférence au maximum de 1 millimètre, de préférence de 0,4 à 1 millimètre et qui présente dans la zone revêtue une épaisseur de 1 à 2,5 millimètres.

11. Machine-outil pour scier des matériaux composites fibreux avec une commande d'oscillation (12) qui présente une broche d'outil (14) qui peut être commandée en mode oscillant autour de son axe longitudinal (16), sur laquelle une lame de scie (20, 20a-g) selon l'une quelconque des revendications 1 à 10 est reçue.
